# EUROPEAN PATENT SPECIFICATION

(11) **EP 3 828 054 B1**
(45) Date of publication and mention of the grant of the patent: **21.06.2023**
(21) Application number: 18940069.0
(22) Date of filing: 19.12.2018
(51) Int. Cl.: B61H 11/14

(54) **ELECTRIC-AIR BRAKE**
ELEKTRISCHE LUFTBREMSE
FREIN À AIR ÉLECTRIQUE

(30) Priority: 15.11.2018 CN 201811359888
(43) Date of publication of application: 02.06.2021
(73) Proprietor: CRRC Zhuzhou Locomotive Co., Ltd., Zhuzhou, Hunan 412001 (CN)
(72) Inventor: FANG, Changzheng, Zhuzhou, Hunan 412001 (CN); ZHOU, Shihua, Zhuzhou, Hunan 412001 (CN); LIU, Quan, Zhuzhou, Hunan 412001 (CN); ZHANG, Shifeng, Zhuzhou, Hunan 412001 (CN); HU, Bin, Zhuzhou, Hunan 412001 (CN)
(74) Representative: Herrmann, Uwe
(86) International application number: PCT/CN2018/121964
(87) International publication number: WO 2020/098058

(56) References cited:
- CN-A- 101 508 287
- CN-A- 105 197 061
- CN-A- 105 564 402
- CN-A- 105 774 785
- CN-A- 106 740 785
- CN-A- 106 740 785
- CN-A- 107 161 132
- CN-U- 201 573 638
- CN-U- 201 761 483
- US-A- 3 944 287
- US-A- 5 662 391
- US-A1- 2002 163 248

## Description

The present invention claims the priority to Chinese Patent Application No. 201811359888.2, titled "ELECTRO-PNEUMATIC BRAKE", filed on November 15, 2018 with the China National Intellectual Property Administration.

### TECHNICAL FIELD

The present invention relates to the technical field of locomotives, and in particular to an electro-pneumatic brake.

### BACKGROUND

For a long time, AAR (North American Railway Association) and UIC (International Union of Railways) have set their respective systems as standards, referred to as an AAR system and an UIC system. At present, railway in the United States, Canada, and Japan adopt the AAR system, and Western Europe and the former European colonies mostly adopt the UIC system. Due to historical reasons, China's railway locomotive vehicle mostly uses the AAR system.

The AAR air automatic braking system is mainly a one-time relief type (also called direct relief type) braking system, that is, when a train is braked, the pressure of a brake pipe is increased to a certain degree, which is able to realize a complete relief of the train brake and allow the whole train to have a good consistency of relief. It is suitable for a long and big train. Because the air braking is be a one-time relief type and does not have multi-stage relief function. The braking force cannot be reduced arbitrarily during the relief, and can only be completely relieved at a time, so the controlled response is non-continuous. Due to the existence of connection gaps between couplers, the train becomes a multi-particle and not completely rigid body, its mathematical model is more complicated, and a closed-loop control cannot be simply adopted.

The UIC air automatic braking system belongs to a multi-stage relief type braking system, that is, when the train is braked, the pressure of the brake pipe is increased to a certain degree, which is able to realize the multi-stage relief of the train brake. When the train is required to be completely relieved, the pressure of an auxiliary air cylinder must be restored close to a constant pressure. It takes a long time for the complete relief. When the train is completely relieved, the braking capacity of train is close to the design level. Before the complete relief, the train is able to maintain a certain level of control, at this time, additional braking is still effective. The complete relief of the UIC system is relatively slow. Due to the multi-stage relief function, the braking system of the train has three states: braking (including multi-stage braking), stage relief and complete relief. Because the air braking system is a multi-stage type with a multi-stage relief function, the braking force is able to be easily adjusted during the relief, the controlled response is continuous, and there is no connection gap between the couplers, its mathematical model is relatively simple, and on this basis multiple closed-loop control of the train automatic control technologies are adopted by UIC trains.

At present, a domestic electro-pneumatic brake is based on China's national railway standards and does not meet the requirements of the UIC540-2006 standard.

Therefore, providing an electro-pneumatic brake that meets the UIC540-2006 standard has become an urgent technical issue to be solved by those skilled in the art. Document US 2002/163248 A1 discloses an electro-pneumatic brake of a railway vehicle, comprising a total air (supply) for providing total air, an equalizing reservoir pressure control for adjusting the pressure of a train pipe, a brake pressure adjustment module for adjusting a braking force of a brake cylinder according to a pressure change of the train pipe, the total air supply is communicated with a compressor; wherein, the equalizing reservoir pressure control has an equalizing reservoir, a first air charging pipe communicated with the total air to charge the equalizing reservoir, a relief electro-pneumatic valve for controlling the air charging of the equalizing reservoir is provided on the first air charging pipe; a brake electro-pneumatic valve for controlling the air discharging of the equalizing reservoir is communicated with the equalizing reservoir.

### SUMMARY

In view of this, the present invention provides an electro-pneumatic brake to meet the UIC540-2006 standard.

In order to achieve the above objectives, the present invention provides the following technical solutions:
an electro-pneumatic brake includes a total air module for providing total air, an equalizing reservoir pressure control module for adjusting the pressure of a train pipe, a brake pressure adjustment module for adjusting a braking force of a brake cylinder according to the pressure change of the train pipe, and a parking brake pressure control module for braking if a locomotive is stationary or braking a locomotive according to the braking force; the total air module is communicated with a compressor;
where,
the equalizing reservoir pressure control module has an equalizing reservoir, a first air charging pipe communicated with the total air module to charge the equalizing reservoir, a second air charging pipe communicated with the total air module to charge the train pipe, and a relay valve, and, the relay valve controls the charging and discharging of the train pipe by the pressure difference between the equalizing reservoir and the train pipe;
a relief electro-pneumatic valve for controlling the air charging of the equalizing reservoir is provided on the first air charging pipe;
a total air shutoff valve for controlling the air charging of the train pipe is provided on the second charging pipe;
a brake electro-pneumatic valve for controlling the air discharging of the equalizing reservoir is communicated with the equalizing reservoir.

Preferably, in the electro-pneumatic brake, the equalizing reservoir pressure control module further includes a third air charging pipe for supplementing air charging to the second air charging pipe, a first end of the third air charging pipeline is communicated with the total air module, a second end of the third air charging pipe is communicated with the second air charging pipe, and a quick relief electro-pneumatic valve is provided on the third air charging pipe for controlling the third air charging pipe to supplement air charging to the second air charging pipe.

Preferably, in the electro-pneumatic brake, the brake pressure adjustment module includes a separate brake pre-control pressure control module, a distribution valve pressure control module, and a brake cylinder pressure control module;
the separate brake pre-control pressure control module has an separate brake pre-control air cylinder capable of outputting an separate brake pre-control pressure, a fourth air charging pipe communicated with the total air module to supply air to the separate brake pre-control air cylinder, an separate brake electro-pneumatic valve provided in the fourth air charging pipe for controlling the air charging of the separate brake pre-control air cylinder, and a separate relief electro-pneumatic valve provided in the separate brake pre-control air cylinder for controlling the air discharging of the separate brake pre-control air cylinder;
the distribution valve pressure control module has a distribution valve and N DBI valves in communication with the total air module, a working air cylinder of the distribution valve is communicated with the train pipe, and a pre-control air cylinder of the distribution valve is communicated with the working air cylinder, a pre-control air cylinder relief valve is provided in the pre-control air cylinder; and the N DBI valves are all communicated with the pre-control air cylinder for outputting the distribution valve pre-control air cylinder pressure of the pre-control air cylinder, in which N is the number of bogies of the locomotive;
the brake cylinder pressure control module has N comparison valves respectively communicated to the DBI valves, and the comparison valves are communicated to the separate brake pre-control pressure control module, an action valve is communicated with the comparison valve, for outputting the larger of the distribution valve pre-control air cylinder pressure and the separate brake pre-control pressure to the corresponding brake cylinder, and, a third comparison valve for outputting the larger pressure of the N action valves, the third comparison valve is communicated with the parking brake pressure control module, and an output pressure of the third comparison valve is a brake cylinder pressure.

Preferably, in the electro-pneumatic brake, the total air module includes:
a first pipe communicating with a compressor;
a first brake air cylinder communicating with the first pipe through a first one-way valve;
a second brake air cylinder communicating with the first pipe through a second one-way valve;
a second pipe communicating with the first pipe for charging the equalizing reservoir pressure control module;
a third pipe communicating with a first brake air cylinder for supplying air to the distribution valve pressure control module;
a fourth pipe communicating with a second brake air cylinder for supplying air to the distribution valve pressure control module;
a fifth pipe communicating with the third pipe for charging a first action valve;
a sixth pipe communicating with the fourth pipe for charging a second action valve;
a seventh pipe communicating with the separate brake pre-control pressure control module;
an eighth pipe communicating with the parking brake pressure control module.

Preferably, in the electro-pneumatic brake, the parking brake pressure control module has a fourth comparison for outputting the larger of the brake cylinder pressure and the parking brake pressure, a pulse electro-pneumatic brake, a parking brake cylinder, a parking brake applying pressure switch and a parking brake relief pressure switch; if the parking brake applying pressure switch outputs a high level, the relief position of the pulse electro-pneumatic brake is communicated with the total air module; if the parking brake relief pressure switch outputs a high level, the brake position of the pulse electro-pneumatic brake is communicated with the atmosphere.

Preferably, the electro-pneumatic brake further includes an emergency braking module, where the emergency braking module includes:
a main air discharging pipe for discharging the pressure of the train pipe to the atmosphere;
an emergency solenoid valve for controlling a first air discharging pipe to communicate with the atmosphere, in which the emergency solenoid valve is in communication with a first emergency pressure switch;
an emergency valve for controlling the train pipe to communicate with the first air discharging pipe;
an auxiliary air discharging pipe for discharging the pressure of the train pipe to the atmosphere, in which the auxiliary air discharging pipe is in communication with the train pipe through an emergency valve, and the emergency valve is in communication with a second emergency pressure switch.

Preferably, the electro-pneumatic brake further includes a backup equalizing reservoir pressure control module, and the backup equalizing pressure control module communicates with the first air charging pipe through a mode switching electro-pneumatic valve for controlling the electro-pneumatic brake to switch between the electro-pneumatic mode and the backup mode, the mode switching electro-pneumatic valve is located between the relief electro-pneumatic brake and the equalizing reservoir;
the backup equalizing pressure control module has a backup equalizing reservoir, a fifth air charging pipe communicated with the mode switching electro-pneumatic valve for charging the backup equalizing reservoir, a backup relief electro-pneumatic brake for controlling the communication of the fifth air charging pipe, a backup brake electro-pneumatic brake communicated with the backup equalizing reservoir for controlling the air discharging of the backup equalizing reservoir, and a backup valve for controlling the backup equalizing reservoir to communicate with the equalizing reservoir.

Preferably, in the electro-pneumatic brake, total air pressure control module is provided between the compressor and the total air module, the total air pressure control module includes:
a first pressure switch capable of releasing the traction blocking signal, in which the working pressure of the first pressure switch (31) is 8.5 to 10 bar;
a second pressure switch for controlling the air supply of the two compressors, in which the working pressure of the second pressure switch is 7.5 to 9.0 bar;
a third pressure switch for controlling the air supply of one compressor, in which the working pressure of the third pressure switch is 5.0 to 6.0 bar.

Preferably, the electro-pneumatic brake further includes a lifting bow control module, and the lifting bow control module has a lifting bow cylinder and a lifting bow air cylinder air discharging valve communicated with the lifting bow cylinder, and the lifting bow cylinder is communicated with an auxiliary compressor.

It can be seen from the above technical solutions that the electro-pneumatic brake provided by the present invention includes the total air module, the equalizing reservoir pressure control module, the brake pressure adjustment module and the parking brake pressure control module. The equalizing reservoir pressure control module has the equalizing reservoir, the first air charging pipe communicated with the total air module to charge the equalizing reservoir, the second air charging pipe communicated with the total air module to charge the train pipe, and the relay valve, and the relay valve controls the charging and discharging of the train pipe by the pressure difference between the equalizing reservoir and the train pipe. The equalizing reservoir pressure control module controls the gradual change of the pressure of the train pipe or the phase change of the pressure of the train tube, so as to realize the phase adjustment of the braking force of the locomotive, and meet the requirements of UIC540-2006 standard.

### BRIEF DESCRIPTION OF THE DRAWINGS

For more clearly illustrating embodiments of the present invention or the technical solutions in the conventional technology, drawings to be used in the description of the embodiments or the conventional technology will be briefly described hereinafter. Apparently, the drawings in the following description are only some embodiments of the present invention For those skilled in the art, other drawings may be obtained based on the provided drawings without any creative work.
Figure 1 is a schematic structural diagram of a total air module provided by an embodiment of the present invention;
Figure 2 is a schematic structural diagram of an equalizing reservoir pressure control module provided by an embodiment of the present invention;
Figure 3 is a schematic structural diagram of a separate brake pre-control module provided by an embodiment of the present invention;
Figure 4 is a schematic structural diagram of a distribution valve pressure control module provided by an embodiment of the present invention;
Figure 5 is a schematic structural diagram of a brake cylinder pressure control module provided by an embodiment of the present invention;
Figure 6 is a schematic structural diagram of a parking brake pressure control module provided by an embodiment of the present invention;
Figure 7 is a schematic structural diagram of an emergency braking module provided by an embodiment of the present invention;
Figure 8 is a schematic structural diagram of a backup equalizing pressure control module provided by an embodiment of the present invention;
Figure 9 is a schematic structural diagram of a total air pressure control module provided by an embodiment of the present invention;
Figure 10 is a schematic structural diagram of a lifting bow control module provided by an embodiment of the present application.

1.equalizing reservoir, 2.relay valve, 3.relief electro-pneumatic valve, 4.total air shutoff valve, 5.brake electro-pneumatic valve, 6.quick relief electro-pneumatic valve, 7.separate brake pre-control air cylinder, 8.separate brake electro-pneumatic valve, 9.separate relief electro-pneumatic valve, 10. distribution valve, 11. first DBI valve, 12.secnd DBI valve, 13. mode switching electro-pneumatic valve, 14.first comparison valve, 15.second comparison valve, 16.first action valve, 17.second action valve, 18.third action valve, 19.first brake cylinder, 20.second brake cylinder, 21.fourth comparison valve, 22.pulse electro-pneumatic valve, 23.parking brake applying pressure switch, 24.parking brake relief pressure switch, 25.emergency solenoid valve, 26.emergency valve, 27.emergency valve, 28.backup relief electro-pneumatic valve, 29.backup brake electro-pneumatic valve, 30.backup valve, 31.first pressure switch, 32.second pressure switch, 33.third pressure switch, 34.lifting bow air cylinder, 35.lifting bow air cylinder air discharging valve.

### DETAILED DESCRIPTION OF THE EMBODIMENTS

The present invention provides an electro-pneumatic brake to meet the UIC540-2006 standard.

The technical solution will be described clearly and completely as follows in conjunction with the drawings in the embodiments of the present invention. It is apparent that the described embodiments are only a part of the embodiments according to the present invention, rather than all of the embodiments. Based on the embodiments of the present application, all other obtained without creative efforts by those of the ordinary skill in the art shall fall within the protection scope of the present invention.

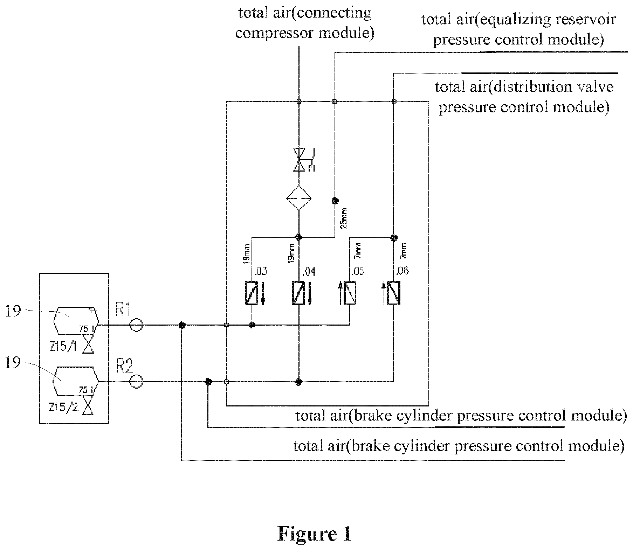

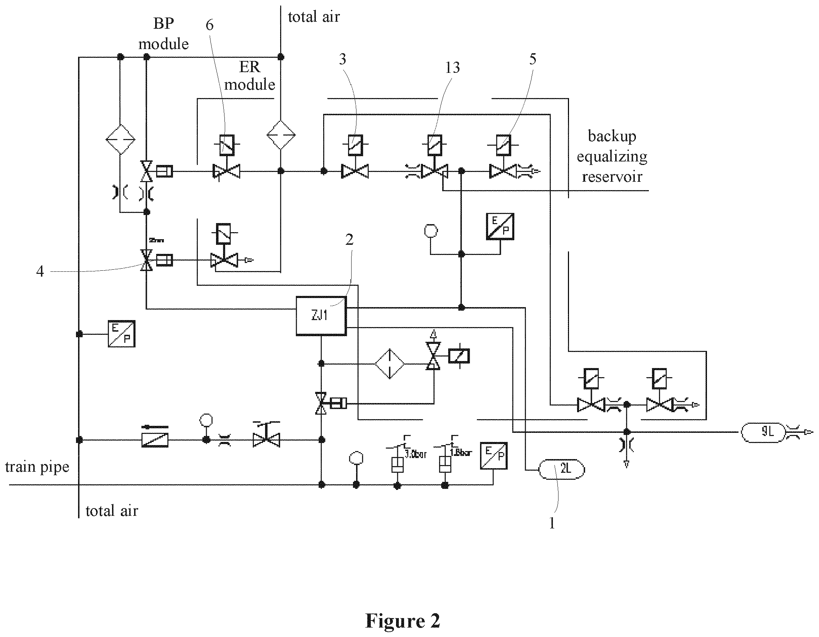

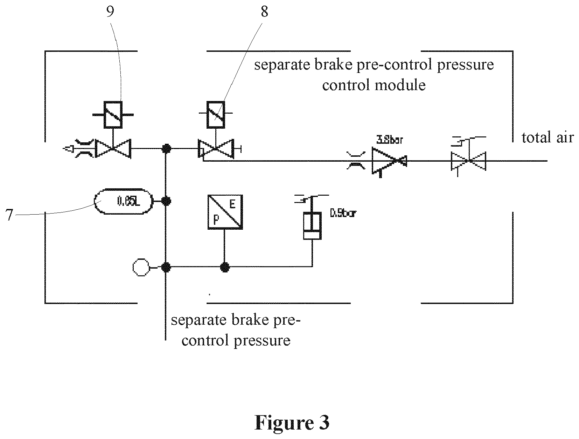

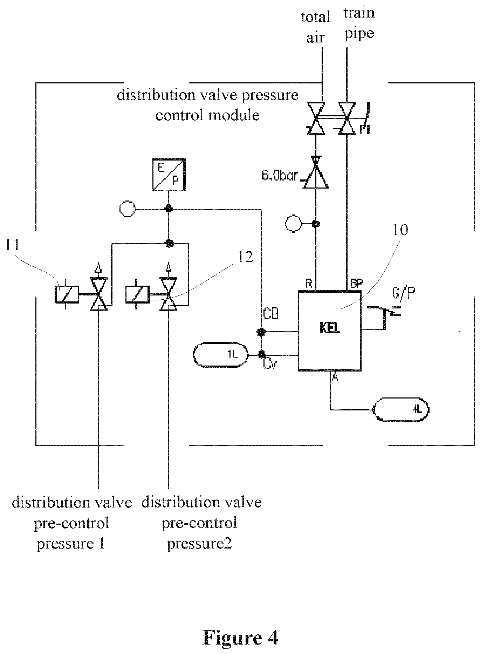

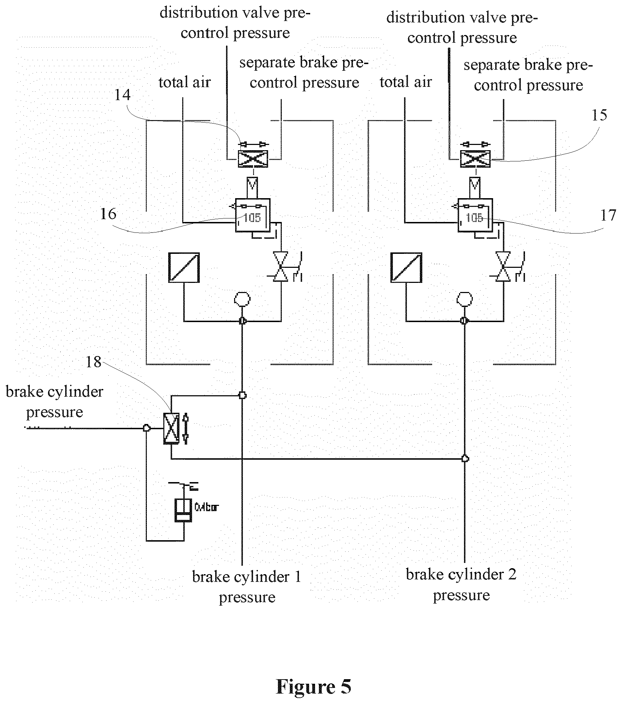

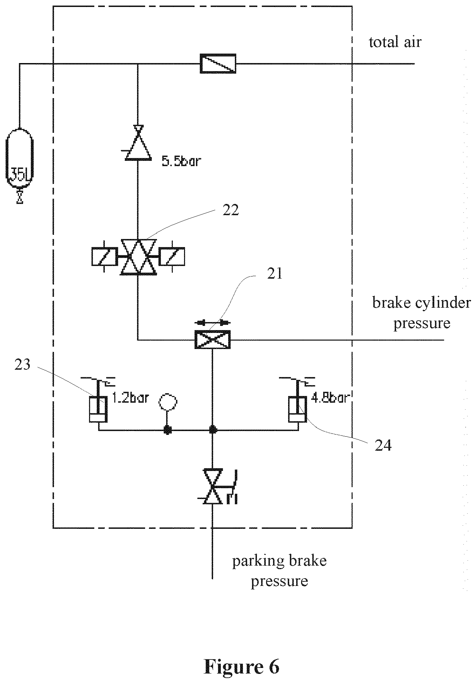

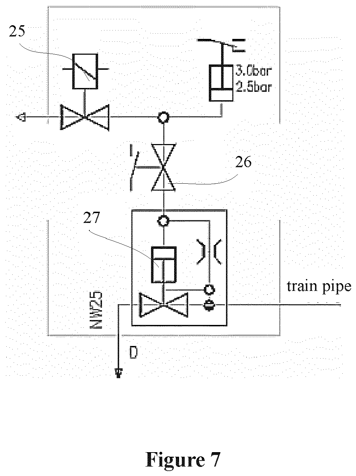

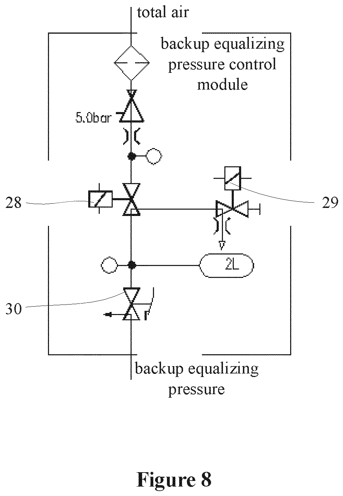

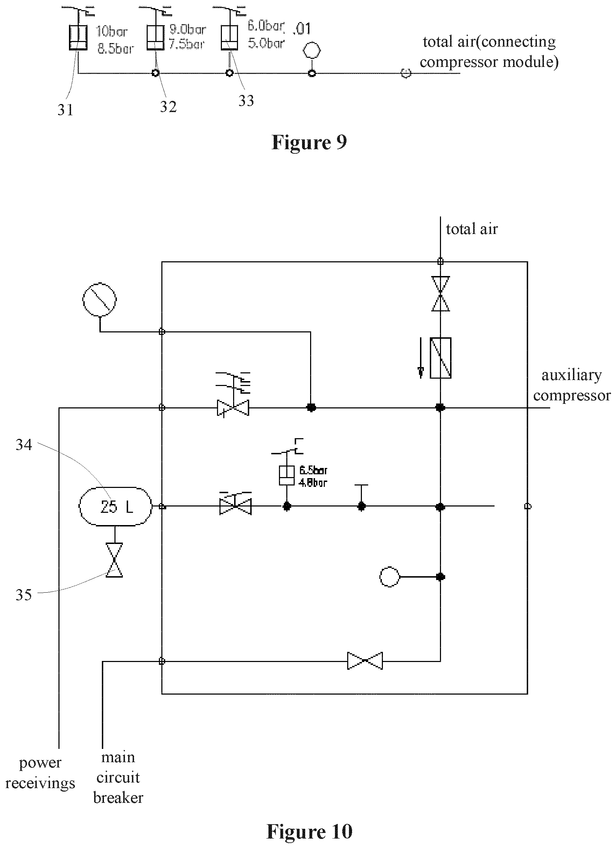

Reference to figures 1 to 10, Figure 1 is a schematic structural diagram of a total air module provided by an embodiment of the present invention; Figure 2 is a schematic structural diagram of an equalizing reservoir pressure control module provided by an embodiment of the present invention; Figure 3 is a schematic structural diagram of a separate brake pre-control module provided by an embodiment of the present application; Figure 4 is a schematic structural diagram of a distribution valve pressure control module provided by an embodiment of the present invention; Figure 5 is a schematic structural diagram of a brake cylinder pressure control module provided by an embodiment of the present invention; Figure 6 is a schematic structural diagram of a parking brake pressure control module provided by an embodiment of the present invention; Figure 7 is a schematic structural diagram of an emergency braking module provided by an embodiment of the present invention; Figure 8 is a schematic structural diagram of a backup equalizing pressure control module provided by an embodiment of the present invention; Figure 9 is a schematic structural diagram of a total air pressure control module provided by an embodiment of the present invention; Figure 10 is a schematic structural diagram of a lifting bow control module provided by an embodiment of the present invention.

The present invention provides an electro-pneumatic brake, which includes a total air module, an equalizing reservoir pressure control module, a brake pressure adjustment module and a parking brake pressure control module.

Specifically, the total module is communicated with a compressor, and the compressed total air is supplied to the total air module by the compressor. The total air module distributes the total air to the equalizing reservoir pressure control module, the brake pressure adjustment module and the parking brake pressure control module.

The equalizing reservoir pressure control module adjusts the pressure of the train pipe according to the braking needs, so as to realize the increase, decrease or maintenance of the pressure of the train pipe.

The brake pressure adjustment module outputs the braking force to realize locomotive braking. At the same time, the brake cylinder pressure is transferred to the parking brake pressure control module, the brake cylinder pressure offsets part of the parking brake pressure, so as to prevent the brake cylinder pressure output by the brake pressure adjustment module from superimposing the parking braking force, which may otherwise causes excessive braking force to damage the locomotive.

When the locomotive is in a stationary or non-control state, the driver controls the parking brake pressure control module to output a parking braking force for stopping the locomotive from moving. At the same time, when the parking brake pressure control module receives the brake cylinder pressure output by the brake pressure adjustment module, the brake cylinder pressure offsets part of the parking brake pressure to avoid the superposition of the brake cylinder pressure and the parking brake pressure, which may otherwise cause excessive braking force to damage the locomotive.

It should be noted here that when the locomotive is parked, the parking braking force and the locomotive braking force (i.e. brake cylinder pressure) exist at the same time, and as time goes by, the brake cylinder pressure of the locomotive decreases, causing the brake cylinder pressure to decrease.

The total air module, the equalizing reservoir pressure control module, the brake pressure adjustment module and the parking brake pressure control module cooperate to realize braking, relief braking or maintaining pressure braking of the locomotive.

Specifically, the equalizing reservoir pressure control module has an equalizing reservoir 1, a first air charging pipe communicated with the total air module to charge the equalizing reservoir 1, a second air charging pipe communicated with the total air module to charge the train pipe, and a relay valve 2, and the relay valve 2 controls the charging and discharging to the train pipe by the pressure difference between the equalizing reservoir 1 and the train pipe.

A relief electro-pneumatic valve 3 for controlling the charging of the equalizing reservoir 1 is provided on the first air charging pipe. If the relief electro-pneumatic valve 3 is opened, the total air is charged into the equalizing reservoir 1 through the first pipe; the relief electro-pneumatic valve 3 is closed, the total air cannot be charged into the equalizing reservoir 1 through the first pipe.

The first air charging pipe is also provided with a first dust filter for filtering the total air to prevent dust in the total air from entering the equalizing reservoir 1 and protect the equipment.

A total air shutoff valve 4 for controlling the air charging of the train pipe is provided on the second air charging pipe. A relay valve 2 is provided in the second air charging pipe between the total air shutoff valve 4 and the train pipe. When the total air shutoff valve 4 is opened, the total air is able to pass through the relay valve 2, and when the total air shutoff valve 4 is closed, the total air cannot pass through the relay valve 2.

The second air charging pipe is also provided with a second dust filter for filtering the total air to prevent dust in the total from entering the train pipe and protect the equipment.

A brake electro-pneumatic valve 5 for controlling the air discharging to the equalizing reservoir 1 is communicated with the equalizing reservoir 1, so as to decrease the pressure of the equalizing reservoir 1. Preferably, the brake electro-pneumatic valve 5 and the relief electro-pneumatic valve 3 share one gas path to communicate with the equalizing reservoir 1. If the brake electro-pneumatic valve 5 is energized, the relief electro-pneumatic valve 3 is de-energized; if the brake electro-pneumatic valve 5 is de-energized, the relief electro-pneumatic valve 3 is energized, thereby controlling the equalizing reservoir 1 to be discharged or charged.

The relief process of the air charging of the equalizing reservoir pressure control module is as follows:
the electro-pneumatic brake is in an electro-pneumatic mode, assuming that the pressure of the equalizing reservoir 1 and the train pipe are A at this time, and a target pressure for relieving the air charging of the train pipe is B;
the relief electro-pneumatic valve 3 is energized, and the brake electro-pneumatic valve 5 is de-energized, and the total air flows through the first dust filter and the relief electro-pneumatic valve 3 to charge the equalizing reservoir 1 until the pressure of the equalizing reservoir 1 reaches B;
the pressure of the equalizing reservoir 1 increases and is greater than the pressure of the train pipe, and the pressure of the equalizing reservoir 1 pushes a piston of the relay valve 2 to open the air charging passage, communicating the second air charging pipe to the train pipe, inside the relay valve 2 ; the total air passes through the second dust filter, the total air shutoff valve 4 and the relay valve 2 to charge the train pipe, and the pressure of the train pipe gradually increases;
as the pressure of the train pipe increases, the piston of the relay valve 2 moves to an initial position until the train pipe pressure is equal to the pressure of the equalizing reservoir 1; at this time, the piston fully closes the air charging passage inside the relay 2 communicating the second pipe to the train pipe, the relief electro-pneumatic valve 3 is de-energized, and the brake electro-pneumatic valve 5 is de-energized.

The air charging brake process of the equalizing reservoir pressure control module is as follows:
the electro-pneumatic brake is in the electro-pneumatic mode, assuming that the pressure of the equalizing reservoir 1 and the train pipe are A at this time, and the target pressure for relieving the air charging of the train pipe is B;
the relief electro-pneumatic valve 3 is de-energized, and the brake electro-pneumatic valve 5 is energized; the first charging pipe that the total air flows through the first dust filter and the relief electro-pneumatic valve 3 to charge the equalizing reservoir 1 is closed, and the air of the equalizing reservoir 1 is discharged to the atmosphere through the brake electro-pneumatic valve 5, until the pressure of the equalizing reservoir 1 reaches B;
the pressure of the equalizing reservoir 1 decreases and is lower than the pressure of the train pipe, and the pressure of the equalizing reservoir 1 pushes the piston of the relay valve 2 to open the air discharging passage communicating the train pipe and the atmosphere; the air charging passage that the total air passes through the second dust filter, the total air shutoff valve 4 and the relay valve 2 to charge the train pipe is closed, the pressure inside the train pipe gradually decreases;
as the pressure of the train pipe decreases, the piston of the relay valve 2 moves to the initial position until the train pipe pressure is equal to the pressure of the equalizing reservoir 1; at this time, the piston fully closes the air charging passage inside the relay 2 communicating the train pipe to the atmosphere, the relief electro-pneumatic valve 3 is de-energized, and the brake electro-pneumatic valve 5 is de-energized.

The equalizing reservoir pressure control module controls the gradual change of the pressure of the train pipe or the stage change of the pressure of the train pipe, so as to realize the phase adjustment of the braking force of the locomotive, and meet the requirements of the UIC540-2006 standard.

The equalizing reservoir pressure control module of the electro-pneumatic brake further includes a third air charging pipe for supplementing air charging to the second air charging pipe, a first end of the third air charging pipe is communicated with the total air module, a second end of the third air charging pipe is communicated with the second air charging pipe, and a quick relief electro-pneumatic valve 6 is provided on the third air charging pipe for controlling the third air charging pipe to supplement air charging to the second air charging pipe. The third air charging pipe is also provided with a switching valve for communicating the third air charging pipe with the second air charging pipe, and the total air enters the third air charging pipe and pushes the switching valve to open.

The third air charging pipe can speed up the air charging of the train pipe, thereby realizing a quick brake relief.

The quick air charging relief process of the equalizing reservoir pressure control module is as follows:
the electro-pneumatic brake is in a electro-pneumatic mode, assuming that the pressure of the equalizing reservoir 1 and the train pipe are A at this time, the pressure of the equalizing reservoir 1 and the pressure of the train pipe are yet to reach a maximum value, and the target pressure for relieving the air charging of the train pipe is B; what needs to be explained here is that the quick relief does not affect the pressure target, but only speeds up the relief of the air charging;
the relief electro-pneumatic valve 3 is energized, and the brake electro-pneumatic valve 5 is de-energized, the total air flows through the first dust filter and the relief electro-pneumatic valve 3 to charge the equalizing reservoir 1, until the pressure of the equalizing reservoir 1 reaches B;
the pressure of the equalizing reservoir 1 increases and is higher than the pressure of the train pipe, and the pressure of the equalizing reservoir 1 pushes the piston of the relay valve 2 to open the air charging passage inside the relay valve 2 communicating the second air charging pipe to the train pipe; the total air passes through a second dust filter, a total air shutoff valve 4 and the relay valve 2 to charge the train pipe, the pressure of the train pipe gradually increases;
the quick relief electro-pneumatic valve 6 is energized, the total air enters the third air charging pipe, the switching valve is opened, and the total air enters the second air charging pipe through the quick relief electro-pneumatic valve 6 and the switching valve, and passes through the total air shutoff valve 4 and the relay valve 2 to charge the train pipe;
as the pressure of the train pipe increases, the piston of the relay valve 2 moves to the initial position until the train pipe pressure is equal to the pressure of the equalizing reservoir 1; at this time, the piston fully closes the air charging passage inside the relay 2 communicating the second pipe to the train pipe, the relief electro-pneumatic valve 3 is de-energized, the brake electro-pneumatic valve 5 is de-energized, and quick relief electro-pneumatic valve 6 is de-energized at this time.

In a specific embodiment of this solution, the brake pressure adjustment module includes a separate brake pre-control pressure control module, a distribution valve pressure control module, and a brake cylinder pressure control module.

The separate brake pre-control pressure control module has an separate brake pre-control air cylinder 7 capable of outputting an separate brake pre-control pressure, a fourth air charging pipe communicated with the total air module to supply air to the separate brake pre-control air cylinder 7, an separate brake electro-pneumatic valve 8 provided in the fourth air charging pipe for controlling the air charging of the separate brake pre-control air cylinder 7, and a separate relief electro-pneumatic valve 9 provided in the separate brake pre-control air cylinder 7 for controlling the air discharging of the separate brake pre-control air cylinder 7.

Controlling the braking and relief of locomotives and vehicles through pressure changes of the train pipe is called automatic braking. With respect to automatic braking, separate braking does not need to control the pressure change of the train pipe, and directly controls the brake cylinder of the locomotive, and separate braking is configured for realizing the braking of the locomotives. The locomotive of the train is communicated with the following vehicle with a train pipe, the vehicle is configured with a vehicle brake, the vehicle brake is configured to brake and relieve the vehicle according to the pressure change transmitted by the train pipe of the locomotive. When the pressure of the train pipe of the controlled locomotive changes, the pressure of the train pipe of the following vehicle will be controlled to follow the pressure change of the train pipe of the locomotive, thereby realizing the braking and relief of the vehicle.

Separate braking does not affect the pressure of the train pipe. Separate braking only controls the braking and relief of the locomotive, and does not brake or relieve the vehicle. The separate brake pre-control pressure control module is provided with a separate brake valve for controlling the total air supply to the separate brake pre-control pressure control module; the air supply pipe that the total air is charged to the separate brake pre-control pressure control module is provided with a separate brake pressure regulating valve for controlling the separate brake pressure to a maximum of 3.8 bar. The separate brake output process of the separate brake pre-control pressure control module is as follows:
the electro-pneumatic brake is in the electro-pneumatic mode, if the separate braking is required, assuming that the pressure of the separate brake pre-control cylinder 7 is A, and the target pressure of the separate brake pre-control is B;
the separate relief electro-pneumatic valve 9 is de-energized, and the separate brake electro-pneumatic valve 8 is de-energized;
the total air flows through the separate brake valve, the separate brake pressure regulating valve and the separate brake electro-pneumatic valve 8 to charge the separate brake pre-control cylinder 7;
the pressure of the separate brake pre-control cylinder 7 gradually rises from A; if the pressure of the separate brake pre-control cylinder 7 increases to B, the separate relief electro-pneumatic valve 9 is de-energized, and the separate brake electro-pneumatic valve 8 is energized; the passage that the total air is charged to the separate brake pre-control cylinder 7 is cut off.

The separate brake relief process of the separate brake pre-control pressure control module is as follows:
the electro-pneumatic brake is in the electro-pneumatic mode, and the separate braking is in the braking state and needs to be relieved separately, assuming that the pressure of the separate brake pre-control cylinder 7 is A, and the target pressure of the separate brake pre-control is B;
the separate relief electro-pneumatic valve 9 is energized, and the passage between the separate pre-control air cylinder and the atmosphere is conducted;
the separate brake electro-pneumatic valve 8 is energized, and the passage that the total air is charged to the separate brake pre-control cylinder 7 is closed;
the pressure of the separate brake pre-control cylinder 7 is discharged to the atmosphere through the separate brake electro-pneumatic valve 8, and the pressure A of the separate brake pre-control cylinder 7 gradually decreases;
if the pressure of the separate brake pre-control cylinder 7 drops to B, the separate relief electro-pneumatic valve 9 is de-energized, and the passage between the separate pre-control air cylinder and the atmosphere is shut off; the separate brake electro-pneumatic valve 8 is still in an energized state, and the air charging passage which maintain the total air to charge the separate brake pre-control cylinder 7 is closed.

The distribution valve pressure control module has a distribution valve 10 and N DBI valves in communication with the total air module. A working air cylinder of the distribution valve 10 is communicated with the train pipe, and a pre-control air cylinder of the distribution valve 10 is communicated with the working air cylinder, a pre-control air cylinder relief valve is provided in the pre-control air cylinder. The N DBI valves are all communicated with the pre-control air cylinder for outputting the distribution valve pre-control air cylinder pressure of the pre-control air cylinder, where N is the number of bogies of the locomotive. The pipe communicating the distribution valve 10 and the total air module are provided with a distribution valve pressure regulating valve for adjusting the pressure of the total air of the distribution valve to a maximum of 6.0bar. The function of the distribution of the distribution valve 10 is to output the pressure of the pre-control air cylinder according to the pressure change of the train pipe. If the pressure of the train pipe increases, the pressure of the pre-control air cylinder output by the distribution valve 10 decreases; the pressure of the train pipe decreases, the pressure of the pre-control air cylinder output by the distribution valve 10 increases.

The pre-control pressure output process of the distribution valve pressure control module is as follows:
the electro-pneumatic brake is in the electro-pneumatic mode,
if the equalizing reservoir pressure control module controls the decompression of the train pipe, assuming that the initial pressure of the train pipe is A, and the decompression target value is B; the initial pressure of the distribution valve 10 is equal to the initial pressure of the train pipe, which is also A; the initial pressure of the pre-control air cylinder of the distribution valve 10 is C;
if the pressure of the train pipe drops, a charging valve port of the distribution valve 10 which the working air cylinder of the distribution valve 10 is charged to the pre-control air cylinder of the distribution valve 10 is opened, and the working air cylinder of the distribution valve 10 is charged to the pre-control air cylinder of the distribution valve 10;
if the equalizing reservoir pressure control module controls the decompression of the train pipe to the target value B, the pressure of the working air cylinder of the distribution valve 10 is also reduced to B, at this time, a charging valve port for charging the pre-control air cylinder of the distribution valve 10 from the working air cylinder B05. 09 of the distribution valve 10 is closed, and the pressure of the distribution valve pre-control air cylinder finally rises to pressure D;
if the equalizing reservoir pressure control module controls the air charging relief of the train pipe, assuming that the initial pressure of the train pipe is A, and the target value of the air charging relief is B; the corresponding initial pressure of the distribution valve 10 is also A; the initial pressure of the pre-control air cylinder of the distribution valve 10 is C;
the pressure of the train pipe increases, the charging valve port for charging the working air cylinder of the distribution valve 10 from the train pipe is opened, and the pressure of the working air cylinder of the distribution valve 10 increases; the passage between the pre-control air cylinder of the distribution valve 10 and the atmosphere is opened, and the pressure of the pre-control air cylinder of the distribution valve 10 decreases;
if the equalizing reservoir pressure control module controls the air charging of the train pipe to be relieved to the target value B, the pressure of the working air cylinder of the distribution valve 10 is corresponding charged to the target value B, at this time, the valve port for discharging to the atmosphere from the pre-control air cylinder of the distribution valve 10 is closed, and the pressure of the distribution valve pre-control air cylinder finally decreases to pressure D;
the pressure of the pre-control air cylinder of the distribution valve 10 outputs the pre-control pressure D of the pre-control air cylinder of the distribution valve 10 through the DBI valve.

It should be noted here that the electro-pneumatic brake is in the electro-pneumatic mode, that is, the backup valve 30 is in a closed position, and the pressure of the equalizing reservoir 1 is adjusted by the equalizing reservoir pressure control module.

The brake cylinder pressure control module has N comparison valves respectively communicated to the DBI valves, an action valve, and a third comparison valve 18 for outputting the larger pressure of the N action valves. The comparison valves are communicated to the separate brake pre-control pressure control module, the action valve is communicated with the comparison valves, for outputting the larger of the distribution valve pre-control air cylinder pressure and the separate brake pre-control pressure to the corresponding brake cylinder, and, the third comparison valve 18 is communicated with the parking brake pressure control module, and the output pressure of the third comparison valve 18 is the brake cylinder pressure.

The pressure of the action valve is output to the brake cylinder through a brake cylinder cutoff valve.

The number of the DBI valves is determined according to the number of bogies of the locomotive. If the locomotive has two bogies, two DBI valves are provided, and if the locomotive has N bogies, N DBI valves are provided, that is, the electro-pneumatic brake provided by this solution is not only suitable for a locomotive with two bogies, but also suitable for a locomotive with multiple bogies. Taking a locomotive with two bogies as an example, that is, N=2, the two DBI valves corresponding to the bogies are named a first DBI valve 11 and a second DBI valve 12; a comparison valve communicated to the first DBI valve 11 is named a first comparison valve 14, a comparison valve communicated to the second DBI valve 12 is named a second comparison valve 15; the action valve communicated to the first comparison valve 14 is named a first action valve 16, and the action valve communicated to the second comparison valve is named a second action valve 17.

The brake pressure output process of the brake cylinder pressure control module is as follows:
assuming that the initial pressure of the pre-control air cylinder of the distribution valve 10 is A, and the initial pressure of the separate brake pre-control air cylinder 7 is B;
the pressure A of the pre-control air cylinder of the distribution valve 10 obtained from the first DBI valve 11 is compared with the pressure B of the separate brake pre-control air cylinder 7 through the first comparison valve 14B07.05, the pressure A of the pre-control air cylinder of the distribution valve 10 obtained from the second DBI valve 12 is compared with the pressure B of the separate brake pre-control air cylinder 7 through the second comparison valve 15. Assuming that the pressure A of the pre-control air cylinder of the distribution valve obtained from the first DBI valve 11 is higher than the pressure B of the separate brake pre-control air cylinder 7, the output pressure of the first action valve 16 communicating with the first comparison valve 14 is the pressure A of the pre-control air cylinder of the distribution valve; assuming that the pressure A of the pre-control air cylinder of the distribution valve obtained from the first DBI valve 11 is lower than the pressure B of the separate brake pre-control air cylinder 7, the output pressure of the first action valve 16 communicating with the first comparison valve 14 is the pressure B of the separate brake pre-control air cylinder 7. It should be noted here that the second action valve 17 has the same function as the first action valve 16, and both of the second action valve 17 and the first action valve 16 are configured to output the larger between the pressure A of the pre-control air cylinder of the distribution valve and the pressure B of the separate brake pre-control air cylinder 7;
the pressure of the first action valve 16 outputs to the first brake cylinder, and the pressure of the second action valve 17 outputs to the second brake cylinder;
the pressure of the first brake cylinder and the pressure of the second brake cylinder respectively output to the corresponding first and second action valves through the first and second brake cylinder cutoff valves, a third comparison valve output the larger of the pressure of the first action valve 16 and the second action valve 17. The pressure of the third comparison valve output to the parking brake pressure control module, and the pressure output by the third comparison valve 18 is the brake cylinder pressure.

The pressure output by the third comparison valve is output to a fourth comparison valve for comparison with the parking brake pressure, so as to avoid the superposition of the brake cylinder pressure of the locomotive and the parking brake pressure, resulting in excessive braking force. In the case of the brake pressure of the locomotive, the parking brake may be reduced. It should be noted here that, the brake cylinder pressure comes from automatic braking and separate braking. The pressure of the train pipe not only leads to brake and relief of the vehicle, but also leads to brake and relief of the locomotive. Emergency braking also affects the pressure of the train pipe, and belongs to automatic braking.

The first action valve and the second action valve receive three signals during operation. Taking the first action valve as an example, the first signal received by the first action valve is the signal of the first comparison valve, and the second signal is the total air signal, the third signal is the pressure of the first brake cylinder. The first action valve detects that the pressure output by the first comparison valve is lower than the pressure of the first brake cylinder, and the first brake cylinder is discharged to the atmosphere through the first action valve, the braking of the first brake cylinder is relieved at this time; the first action valve detects that the pressure output by the first comparison valve is higher than the pressure of the first brake cylinder, the total air is charged to the first brake cylinder through the first action valve, the first brake cylinder brakes at this time; the first action valve detects that the pressure output by the first comparison valve is equal to the pressure of the first brake cylinder, the total air is neither charged to the first brake cylinder through the first action valve, nor discharged to the atmosphere through the first action valve, the first brake cylinder brakes and maintains pressure. The working principle of the second action valve is the same as that of the first action valve, the braking principle of the first brake cylinder is also the same as that of the second brake cylinder.

The braking, relief braking, and pressure maintaining braking of the first brake cylinder and the second brake cylinder are the braking states of the locomotive, not the braking states of the vehicle communicated to the locomotive.

In a specific embodiment of this solution, the total air module includes a first pipe, a second pipe, a third pipe, a fourth pipe, a fifth pipe, a sixth pipe, a seventh pipe, an eighth pipe, a first brake air cylinder 19 and a second brake air cylinder 20.

The first pipe is communicated to the compressor, and the first pipe is configured as the main air supply pipe of the total air module, and is provided with a dust filter for preventing external dust from entering the total air module, and a total air valve for controlling the total air to enter the total air module, and the total air valve is arranged between the air inlet of the first pipe and the dust filter;
one end of the second pipe is communicated with the first pipe, and the other end of the second pipe is communicated with the equalizing reservoir pressure control module;
the first pipe communicates with the first brake air cylinder 19 through the first one-way valve, and the first brake air cylinder 19 is configured to store pressure air for braking with a volume of 75L; the opening and closing of the first one-way valve is configured to control the total air charging to the first brake cylinder 19;
the first pipe communicates with the second brake air cylinder 20 through the second one-way valve, and the second brake air cylinder 20 is configured to store pressure air for braking with a volume of 75L; the opening and closing of the second one-way valve is configured to control the total air charging to the second brake cylinder 20;
the third pipe communicates with the first brake air cylinder 19, the first brake air cylinder 19 supplies air to the distribution valve pressure control module, and the third pipe is provided with a third one-way valve for controlling the first brake air cylinder 19 to supply air to the distribution valve pressure control module;
the fourth pipe communicates with the second brake air cylinder 20, the second brake air cylinder 20 supplies air to the distribution valve pressure control module, and the fourth pipe is provided with a fourth one-way valve for controlling the second brake air cylinder 20 to supply air to the distribution valve pressure control module;
the fifth pipe is in communication with the third pipe, and the first brake air cylinder 19 is configured to supply air to the first action valve 16;
the sixth pipe is in communication with the fourth pipe, and the second brake air cylinder 20 is configured to supply air to the second action valve 17;
the seventh pipe and the eighth pipe are respectively communicated with third pipe or the fourth pipe, and are configured to supply air to the separate brake pre-control pressure control module and the parking brake pressure control module;
specifically, the total air module is communicated to the air compressor of the locomotive, and the total air enters the total air module from the air compressor through a total air valve and a dust filter;
one part of the total air is charged to the first brake air cylinder 19 and the second brake air cylinder 20, and the other part of the total air is charged to the equalizing reservoir pressure control module;
one part of the total air in the first brake air cylinder 19 is charged to the first action valve 16 of the brake cylinder pressure control module, and the other part of the total air in the first brake air cylinder 19 is charged to the distribution valve pressure control module; one part of the total air in the second brake air cylinder 20 is charged to the second action valve of the brake cylinder pressure control module, and the other part of the total air in the second brake air cylinder 20 is charged to the distribution valve pressure control module.

In a specific embodiment of this solution, the parking brake pressure control module has a fourth comparison 21, a pulse electro-pneumatic brake 22, a parking brake cylinder, a parking brake applying pressure switch 23 and a parking brake relief pressure switch 24.

The fourth comparison 21 is configured to output the larger of the brake cylinder pressure and the parking brake pressure; the pulse electro-pneumatic brake 22 is configured to control parking application or relief according to the control command; the parking brake cylinder is configured to store the pressure air for parking brake, and a parking brake cutoff valve is arranged between the parking brake cylinder and the fourth comparison valve 21; the parking brake applying pressure switch 23 outputs a high level when the parking brake cylinder pressure is higher than the first preset pressure, and the parking brake relief pressure switch 24 outputs a high level when the parking brake cylinder pressure is lower than the second preset pressure; when the parking brake applying pressure switch 23 outputs a high level, the relief position of the pulse electro-pneumatic brake 22 is communicated with the total air module; when the parking brake relief pressure switch 24 outputs a high level, the brake position of the pulse electro-pneumatic brake 22 is communicated with the atmosphere. The pipe communicating the eighth pipe with the parking brake cylinder is provided with a parking brake pressure regulating valve that regulates the total air of the parking brake not higher than 5.5 bar.

The function of the fourth comparison valve is to output the larger of the parking brake pressure and the brake cylinder pressure, to avoid the superimposed output of the parking brake pressure and the brake cylinder pressure.

If the brake cylinder pressure control module has no brake cylinder pressure output, the parking brake pressure output process of the parking brake pressure control module is as follows:
assuming that it is currently in a parking relief state, and assuming that the parking brake cylinder pressure is higher than a first preset pressure, the parking brake relief pressure switch 24 outputs a high level signal at this time;
if the parking brake pressure control module receives the parking brake applying signal at this time, the pulse electro-pneumatic brake 22 is energized and is in the braking position, and the pressure of the parking brake cylinder is discharged to the atmosphere through the braking position of the pulse electro-pneumatic brake 22; if the pressure of the parking brake cylinder is gradually reduced until the parking brake pressure is lower than a second preset pressure, the spring in the parking brake cylinder is not compressed by air to apply the parking brake, and the parking brake applying pressure switch 23 outputs a high level;
assuming that it is currently in a parking applying state, and assuming that the parking brake cylinder pressure is lower than the second preset pressure, the parking brake applying pressure switch 23 outputs a high level signal at this time;
if the parking brake pressure control module receives the parking relief applying signal at this time, the pulse electro-pneumatic brake 22 is de-energized and is in the relief position, and the total air is charged to the parking brake cylinder through the relief position of the pulse electro-pneumatic brake 22; if the pressure of the parking brake cylinder is gradually increased until the parking brake pressure is larger than a second preset pressure, the spring in the parking brake cylinder is compressed by air to apply the parking relief, and the parking brake relief pressure switch 23 outputs a high level.

If the brake cylinder pressure control module has brake cylinder pressure output, the parking brake relief pressure output process of the parking brake pressure control module is as follows:
the parking brake is in the applying state, that is, there is no compression air inside the parking brake cylinder, and the pressure in the parking brake cylinder is lower than the second preset pressure, the parking brake applying pressure switch 23 outputs a high level; the brake cylinder pressure is input to the parking brake cylinder through the fourth comparison valve and the relief position of the double-pulse electro-pneumatic brake and charged the parking brake cylinder. As the parking brake cylinder pressure gradually increases, the spring in the parking brake cylinder is gradually compressed until the pressure of the parking brake cylinder reaches a third preset pressure, and the brake cylinder cannot continue to charge the parking brake cylinder. It should be noted here that the third preset pressure is lower than the first preset pressure. If the pressure in the parking brake cylinder reaches to the third preset pressure, the spring inside the parking brake cylinder is in a compressed state and is not fully compressed and close to a fully compressed state, and the parking brake is in a semi-relief state. In this step, the brake cylinder pressure eliminates the parking brake pressure, thereby avoiding brake shoe damage caused by the superposition of the brake cylinder pressure and the parking brake pressure. As the pressure of the brake cylinder decreases, the parking brake relief pressure switch 24 outputs a high level signal. The pressure of the braking brake cylinder is discharged to the atmosphere through relief position of the double-pulse electro-pneumatic brake. The pressure of the parking brake cylinder gradually decreases, and the spring in the parking brake cylinder returns to its initial state. If the pressure of the brake cylinder decreases to zero, the parking brake is realized.

In a specific embodiment of this solution, the first preset pressure is 4.8 bar, the second preset pressure is 1.2 bar, and the third preset pressure is 3.8 bar.

The parking brake pressure control module is air charging relief and air discharging brake, which is opposite to the braking mode of the brake cylinder pressure control module.

There is a brake spring inside the parking brake cylinder, and the air discharging releases the spring to realize the parking brake, and the air charging compresses the spring to realize the parking relief.

The electro-pneumatic brake provided by this solution further includes an emergency braking module.

The emergency braking module includes: a main air discharging pipe for discharging the pressure of the train pipe to the atmosphere; an emergency solenoid valve 25 for controlling a first air discharging pipe to communicate with the atmosphere, and the emergency solenoid valve 25 in communication with a first emergency pressure switch; an emergency valve 26 for controlling the train pipe to communicate with the first air discharging pipe; an auxiliary air discharging pipe for discharging the pressure of the train pipe to the atmosphere, and the auxiliary air discharging pipe in communication with the train pipe through an emergency valve 27, and the emergency valve 27 in communication with a second emergency pressure switch.

The first emergency pressure switch outputs a high level if the pressure of the train pipe is detected less than 2.5 bar; and outputs a low level if the pressure of the train pipe is detected greater than 3.0 bar.

Under normal circumstances, the emergency solenoid valve 25 is always energized, shutting off the passage between the train pipe and the atmosphere.

If the emergency solenoid valve 25 is de-energized, the passage between the train pipe and the first air discharging pipe is opened, and the pressure of the train pipe decreases rapidly; if pressure of the train pipe decreases to the preset pressure, the emergency valve 27 is de-energized, and the train pipe is communicated with the auxiliary air discharging pipe, which further accelerates the speed of the pressure of the train pipe discharging to the atmosphere.

If the pressure of the train pipe is higher than 300kPa, the first emergency pressure switch outputs a low level, and if the pressure of the train pipe is lower than 250kPa, the first emergency pressure switch outputs a high level. If the pressure of the train pipe is lower than 250kPa, the first emergency pressure switch outputs a high level, which indicates that the emergency brake has been triggered.

Braking, relief and pressure maintaining in the electro-pneumatic mode refer to the pressure control of the train pipe by the equalizing reservoir pressure control module.

Electro-pneumatic mode braking: control the pressure decrease of the equalizing reservoir 1 through the equalizing reservoir pressure control module, and the pressure difference between the equalizing reservoir 1 and the train pipe pushes the piston of the relay valve 2 to control the air discharging and pressure reduction of the train pipe. Under the action of the distribution valve 10, the pressure of the distribution valve pre-control cylinder increases, and finally brake is realized under the action of the brake cylinder pressure control module, and the brake cylinder pressure increases.

Electro-pneumatic mode relief: control the pressure increase of the equalizing reservoir 1 through the equalizing reservoir pressure control module, and the pressure difference between the equalizing reservoir 1 and the train pipe pushes the piston of the relay valve 2 to control the total air to charge the train pipe. Under the action of the distribution valve 10, the pressure of the distribution valve pre-control cylinder decreases, and finally relief is realized under the action of the brake cylinder pressure control module, and the brake cylinder pressure decreases.

Electro-pneumatic mode pressure maintaining: control the constant pressure of the equalizing reservoir 1 through the equalizing reservoir pressure control module, and the pressure of the train pipe remains the same, the pressure of distribution valve pre-control air cylinder remains the same, and the pressure output of the brake cylinder pressure control module remains unchanged, and the brake cylinder maintains the pressure.

The electro-pneumatic brake provided by this solution further includes a backup equalizing pressure control module.

It should be noted here that the backup mode of the electro-pneumatic brake is that the backup valve 30 is in the open position, and the pressure of the equalizing reservoir 1 is adjusted by the backup equalizing pressure control module.

The backup mode of the electro-pneumatic brake is that after the equalizing reservoir pressure control module cannot transmit a signal to the brake pressure adjustment module, the backup mode of the electro-pneumatic brake transmits a signal to the brake pressure adjustment module, so as to achieve locomotive braking.

The backup equalizing pressure control module communicates with the first air charging pipe through a mode switching electro-pneumatic valve 13, and the mode switching electro-pneumatic valve 13 is located between the relief electro-pneumatic brake 3 and the equalizing reservoir 1. The mode switching electro-pneumatic valve 13 is configured for controlling the locomotive to switch between the electro-pneumatic mode and the backup mode, so as to ensure the safe operation of the locomotive.

The backup equalizing pressure control module has a backup equalizing reservoir, a fifth air charging pipe communicated with the mode switching electro-pneumatic valve 13 for charging the backup equalizing reservoir, a backup relief electro-pneumatic brake 28 for controlling the communication of the fifth air charging pipe, a backup brake electro-pneumatic valve 29 communicated with the backup equalizing reservoir for controlling the air discharging of the backup equalizing reservoir, and a backup valve 30 for controlling the backup equalizing reservoir to communicate with the equalizing reservoir 1. The fifth charging pipe is provided with a dust filter and a backup brake pressure regulating valve. The backup brake pressure regulating valve controls the total pressure of the backup brake to be not higher than 5.0 bar.

Under the working condition of the equalizing reservoir pressure control module, the mode switching electro-pneumatic valve 13 is in an energized state.

If the electro-pneumatic brake in in the backup mode, the mode switching electro-pneumatic valve 13 is de-energized, assuming that the backup equalizing pressure is A, the backup equalizing target pressure is B, and the backup valve 30 is opened to communicate the backup equalizing reservoir and the equalizing reservoir 1.

If the backup equalizing pressure control module receives the equalizing relief control command, the backup equalizing relief electro-pneumatic valve is energized, and the backup equalizing brake electro-pneumatic valve is energized;
the total air flows through the dust filter, the backup brake pressure regulating valve, and the backup equalizing relief electro-pneumatic valve to charge the backup equalizing reservoir, and the pressure of the backup equalizing reservoir B16.08 increases;
if the pressure of the backup equalizing reservoir increases to pressure B, the backup equalizing relief electro-pneumatic valve is de-energized and the backup equalizing brake pressure regulating valve is energized, the pressure of the backup equalizing reservoir is in a pressure maintaining state.

If the backup equalizing pressure control module receives the equalizing brake control command, the backup equalizing relief electro-pneumatic valve is de-energized, and the backup equalizing brake electro-pneumatic valve is de-energized, communicating the passage between the backup equalizing reservoir and the atmosphere;
the air charging passage that the total air flows through the dust filter, the backup brake pressure regulating valve, and the backup equalizing relief electro-pneumatic valve to charge the backup equalizing reservoir is closed, the backup equalizing reservoir is discharged to the atmosphere through the backup equalizing brake electro-pneumatic valve, and the pressure of the backup equalizing reservoir decreases;
if the pressure of the backup equalizing reservoir decreases to pressure B, the backup equalizing relief electro-pneumatic valve is de-energized and the backup equalizing brake pressure regulating valve is energized, the pressure of the backup equalizing reservoir is in a pressure maintaining state.

The equalizing pressure in the backup mode is controlled by the backup equalizing pressure control module. The pressure control of the train pipe is the same as the control of the equalizing reservoir pressure control module, and is adjusted according to the change of the backup equalizing reservoir pressure.

In the backup mode, the pressure of the backup equalizing reservoir is adjusted through the backup equalizing reservoir pressure control module, and then, the pressure of the train pipe is controlled by the equalizing reservoir pressure control module.

Backup mode brake: the backup equalizing pressure control module controls the pressure of the backup equalizing reservoir to decrease, and the pressure of the equalizing reservoir 1 communicated with the backup equalizing reservoir also decreases. Under the action of the relay valve 2 of the equalizing reservoir pressure control module, the pressure of the train pipe also decreases, and then under the action of the distribution valve 10, the distribution valve pre-control air cylinder increases, and the increased distribution valve pre-control air cylinder pressure is output, and then the brake is realized under the action of the brake cylinder pressure control module. At this time, the brake is the brake in the backup mode and the output pressure of the brake cylinder increases.

Backup mode relief: the backup equalizing pressure control module controls the pressure of the backup equalizing reservoir to increase, and the pressure of the equalizing reservoir 1 communicated with the backup equalizing reservoir also increases. Under the action of the relay valve 2 of the equalizing reservoir pressure control module, the pressure of the train pipe also increases, and then under the action of the distribution valve 10, the distribution valve pre-control air cylinder decreases, and the decreased distribution valve pre-control air cylinder pressure is output, and then the relief is realized under the action of the brake cylinder pressure control module. At this time, the relief is the relief in the backup mode and the output pressure of the brake cylinder decreases.

Backup mode pressure maintaining: the backup equalizing pressure control module controls the pressure of the backup equalizing reservoir to remain unchanged, and the pressure of the equalizing reservoir 1 communicated with the backup equalizing reservoir is also unchanged. Under the action of the distribution valve 10, the pressure of the distribution valve pre-control air cylinder is unchanged, and the brake pressure output by the brake cylinder pressure control module remains unchanged. At this time, the pressure maintaining is in the backup mode and the output pressure of the brake cylinder remains unchanged.

The backup brake electro-pneumatic valve 29 is always in an energized state during the process of air charging and pressure maintaining, and the passage between the backup equalizing reservoir and the atmosphere is conducted if the backup brake electro-pneumatic valve 29 is de-energized, so as to decompress the backup equalizing reservoir.

The electro-pneumatic brake provided in this solution, a total air pressure control module is provided between the compressor and the total air module, the total air pressure control module includes:
a first pressure switch 31 capable of releasing the traction blocking signal, in which the working pressure of the first pressure switch 31 is 8.5 to 10 bar;
a second pressure switch 32 for controlling the air supply of the two compressors, in which the working pressure of the second pressure switch 32 is 7.5 to 9.0 bar;
a third pressure switch 33 for controlling the air supply of one compressor, in which the working pressure of the third pressure switch 32 is 5.0 to 6.0 bar.

Through the cooperation of the first pressure switch 31, the second pressure switch 32, and the third pressure switch 33, the pressure regulation of the total air supplied to the total air module is realized.

If the total air pressure is lower than 500kPa, the third total air pressure switch outputs a high level, and if the total air pressure is higher than 600kPa, the third total air pressure switch outputs a low level. The first total air pressure switch is configured to send out the traction lock signal if total air is lower than 500kPa, and the traction lock signal is released if the total air is higher than 600kPa.

If the total air pressure is lower than 750kPa, the second total air pressure switch outputs a high level, and if the total air pressure is higher than 900kPa, the second total air pressure switch outputs a low level. The second total air pressure switch is configured to control the start and stop of the two compressors. The second total air pressure switch outputs a high level to indicate the start signal of two compressors, and the second total air pressure switch outputs a low level to indicate indicates the stop signal of two compressors.

If the total air pressure is lower than 850kPa, the third total air pressure switch outputs a high level, and if the total air pressure is higher than 1000kPa, the third total air pressure switch outputs a low level. The third total air pressure switch is configured to control the start and stop of one compressor. The third total air pressure switch outputs a high level to indicate the start signal of one compressor, and the third total air pressure switch outputs a low level to indicate indicates the stop signal of one compressor.

In a specific embodiment of this solution, the electro-pneumatic brake further includes a lifting bow control module.

The lifting bow control module has a lifting bow cylinder 34 and a lifting bow air cylinder air discharging valve 35 communicated with the lifting bow cylinder 34, and the lifting bow cylinder 34 is communicated with an auxiliary compressor. A lifting bow pressure switch is provided on the communication pipe between the auxiliary compressor and the lifting bow cylinder 34, and the lifting bow pressure switch controls the start and stop of the auxiliary compressor.

The pressure of the lifting bow air cylinder 34 is controlled by the auxiliary compressor.

If the pressure of the lifting bow air cylinder 34 is lower than 4800kPa, the lifting bow pressure switch outputs a high level, and the auxiliary is controlled to start charging the lifting bow air cylinder 34; when the pressure of the lifting bow air cylinder 34 is higher than 650kPa, the lifting bow pressure switch outputs a low level, and the auxiliary is controlled to stop charging the lifting bow air cylinder 34.

The total air supply of the lifting bow control module is also supplied by the total air module.

The above illustration of the disclosed embodiments can enable those skilled in the art to implement or use the present invention. Various modifications to the embodiments are apparent to the person skilled in the art, and the general principle herein can be implemented in other embodiments without departing from the scope of the appended claims.

## Claims

1. An electro-pneumatic brake, comprising a total air module for providing total air, an equalizing reservoir pressure control module for adjusting the pressure of a train pipe, a brake pressure adjustment module for adjusting a braking force of a brake cylinder according to a pressure change of the train pipe, and a parking brake pressure control module for braking if a locomotive is stationary or braking a locomotive according to the braking force; the total air module is communicated with a compressor;
wherein,
the equalizing reservoir pressure control module has an equalizing reservoir (1), a first air charging pipe communicated with the total air module to charge the equalizing reservoir (1), a second air charging pipe communicated with the total air module to charge the train pipe, and a relay valve (2), and the relay valve (2) controls the air charging and discharging of the train pipe by the pressure difference between the equalizing reservoir (1) and the train pipe;
a relief electro-pneumatic valve (3) for controlling the air charging of the equalizing reservoir (1) is provided on the first air charging pipe;
a total air shutoff valve (4) for controlling the air charging of the train pipe is provided on the second air charging pipe;
a brake electro-pneumatic valve (5) for controlling the air discharging of the equalizing reservoir (1) is communicated with the equalizing reservoir (1).

2. The electro-pneumatic brake according to claim 1, wherein the equalizing reservoir pressure control module further comprises a third air charging pipe for supplementing air charging to the second air charging pipe, a first end of the third air charging pipe is communicated with the total air module, a second end of the third air charging pipe is communicated with the second air charging pipe, and a quick relief electro-pneumatic valve (6) is provided on the third air charging pipe for controlling the third air charging pipe to supplement air charging to the second air charging pipe.

3. The electro-pneumatic brake according to claim 1, wherein the brake pressure adjustment module comprises a separate brake pre-control pressure control module, a distribution valve pressure control module, and a brake cylinder pressure control module;
the separate brake pre-control pressure control module has an separate brake pre-control air cylinder (7) configured to output an separate brake pre-control pressure, a fourth air charging pipe communicated with the total air module to supply air to the separate brake pre-control air cylinder (7), an separate brake electro-pneumatic valve (8) provided in the fourth air charging pipe for controlling the air charging of the separate brake pre-control air cylinder (7), and a separate relief electro-pneumatic valve (9) provided in the separate brake pre-control air cylinder (7) for controlling the air discharging of the separate brake pre-control air cylinder (7);
the distribution valve pressure control module has a distribution valve (10) and N DBI valves in communication with the total air module, a working air cylinder of the distribution valve (10) is communicated with the train pipe, and a pre-control air cylinder of the distribution valve (10) is communicated with the working air cylinder, a pre-control air cylinder relief valve is provided on the pre-control air cylinder; and the N DBI valves are all communicated with the pre-control air cylinder for outputting a distribution valve pre-control air cylinder pressure of the pre-control air cylinder, where N is the number of bogies of the locomotive;
the brake cylinder pressure control module has N comparison valves respectively communicated to the DBI valves, an action valve, and a third comparison valve (18) for outputting the larger pressure of the N action valves, and the comparison valves are communicated to the separate brake pre-control pressure control module, the action valve is communicated with the comparison valve, for outputting the larger of the distribution valve pre-control air cylinder pressure and the separate brake pre-control pressure to the corresponding brake cylinder, and, the third comparison valve (18) is communicated with the parking brake pressure control module, and an output pressure of the third comparison valve (18) is a brake cylinder pressure.

4. The electro-pneumatic brake according to claim 3, wherein the total air module comprises:
a first pipe communicating with a compressor;
a first brake air cylinder (19) communicating with the first pipe through a first one-way valve;
a second brake air cylinder (20) communicating with the first pipe through a second one-way valve;
a second pipe communicating with the first pipe for charging the equalizing reservoir pressure control module;
a third pipe communicating with a first brake air cylinder (19) for supplying air to the distribution valve pressure control module;
a fourth pipe communicating with a second brake air cylinder (20) for supplying air to the distribution valve pressure control module;
a fifth pipe communicating with the third pipe for charging a first action valve (16);
a sixth pipe communicating with the fourth pipe for charging a second action valve (17);
a seventh pipe communicating with the separate brake pre-control pressure control module;
an eighth pipe communicating with the parking brake pressure control module.

5. The electro-pneumatic brake according to claim 1, wherein the parking brake pressure control module has a fourth comparison (21) for outputting the larger of the brake cylinder pressure and the parking brake pressure, a pulse electro-pneumatic brake (22), a parking brake cylinder, a parking brake applying pressure switch (23) and a parking brake relief pressure switch (24); if the parking brake applying pressure switch (23) outputs a high level, a relief position of the pulse electro-pneumatic brake (22) is communicated with the total air module; if the parking brake relief pressure switch (24) outputs a high level, a brake position of the pulse electro-pneumatic brake (22) is communicated with the atmosphere.

6. The electro-pneumatic brake according to claim 1, further comprising an emergency braking module, wherein the emergency braking module comprises:
a main air discharging pipe for discharging a pressure of the train pipe to the atmosphere;
an emergency solenoid valve (25) for controlling a first air discharging pipe to communicate with the atmosphere, wherein the emergency solenoid valve (25) is in communication with a first emergency pressure switch;
an emergency valve (26) for controlling the train pipe to communicate with the first air discharging pipe;
an auxiliary air discharging pipe for discharging the pressure of the train pipe to the atmosphere, wherein the auxiliary air discharging pipe is in communication with the train pipe through an emergency valve (27), and the emergency valve (27) is in communication connection with a second emergency pressure switch.

7. The electro-pneumatic brake according to claim 1, further comprises a backup equalizing pressure control module, wherein the backup equalizing pressure control module communicates with the first air charging pipe through a mode switching electro-pneumatic valve (13) for controlling the electro-pneumatic brake to switch between an electro-pneumatic mode and a backup mode, the mode switching electro-pneumatic valve (13) is located between the relief electro-pneumatic brake (3) and the equalizing reservoir (1);
the backup equalizing pressure control module has a backup equalizing reservoir, a fifth air charging pipe communicated with the mode switching electro-pneumatic valve (13) for charging the backup equalizing reservoir, a backup relief electro-pneumatic brake (28) for controlling the communication of the fifth air charging pipe, a backup brake electro-pneumatic valve (29) communicated with the backup equalizing reservoir for controlling the air discharging to the backup equalizing reservoir, and a backup valve (30) for controlling the backup equalizing reservoir to communicate with the equalizing reservoir (1).

8. The electro-pneumatic brake according to claim 1, wherein a total air pressure control module is provided between the compressor and the total air module, the total air pressure control module comprises:
a first pressure switch (31) for removing a traction blocking signal, in which the working pressure of the first pressure switch (31) is 8.5 to 10 bar;
a second pressure switch (32) for controlling the air supply of the two compressors, in which the working pressure of the second pressure switch (32) is 7.5 to 9.0 bar;
a third pressure switch (33) for controlling the air supply of one compressor, in which the working pressure of the third pressure switch (32) is 5.0 to 6.0 bar.

9. The electro-pneumatic brake according to claim 1, further comprising a lifting bow control module, wherein the lifting bow control module has a lifting bow cylinder (34) and a lifting bow air cylinder air discharging valve (35) communicated with the lifting bow cylinder (34), and the lifting bow cylinder (34) is communicated with an auxiliary compressor.

## Patentansprüche

1. Elektropneumatische Bremse, aufweisend ein Gesamtluftmodul zum Bereitstellen von Gesamtluft, ein Ausgleichsbehälterdrucksteuermodul zum Einstellen des Drucks einer Zugleitung, ein Bremsdruckeinstellmodul zum Einstellen einer Bremskraft eines Bremszylinders gemäß einer Druckänderung der Zugleitung und ein Feststellbremsdrucksteuermodul zum Bremsen, wenn eine Lokomotive steht, oder zum Bremsen einer Lokomotive gemäß der Bremskraft; das Gesamtluftmodul mit einem Kompressor kommuniziert;
wobei
das Ausgleichsbehälterdrucksteuermodul einen Ausgleichsbehälter (1), eine erste Luftladeleitung, die mit dem Gesamtluftmodul kommuniziert, um den Ausgleichsbehälter (1) zu laden, eine zweite Luftladeleitung, die mit dem Gesamtluftmodul kommuniziert, um die Zugleitung zu laden, und ein Relaisventil (2) aufweist und das Relaisventil (2) das Luftladung und -entladung der Zugleitung durch die Druckdifferenz zwischen dem Ausgleichsbehälter (1) und der Zugleitung steuert;
ein elektropneumatisches Entlastungsventil (3) zum Steuern der Luftladung des Ausgleichsbehälters (1) an der ersten Luftladeleitung bereitgestellt ist;
ein Gesamtluftabsperrventil (4) zum Steuern der Luftladung der Zugleitung an der zweiten Luftladeleitung bereitgestellt ist;
ein elektropneumatisches Bremsventil (5) zum Steuern der Luftentladung des Ausgleichsbehälters (1) mit dem Ausgleichsbehälter (1) kommuniziert.

2. Elektropneumatische Bremse nach Anspruch 1, wobei das Ausgleichsbehälterdrucksteuermodul ferner eine dritte Luftladeleitung zum Ergänzen der Luftladung an die zweite Luftladeleitung aufweist, ein erstes Ende der dritten Luftladeleitung mit dem Gesamtluftmodul kommuniziert, ein zweites Ende der dritten Luftladeleitung mit der zweiten Luftladeleitung kommuniziert und an der dritten Luftladeleitung ein elektropneumatisches Schnellentlastungsventil (6) bereitgestellt ist, um die dritte Luftladeleitung zu steuern, um die Luftladung an die zweite Luftladeleitung zu ergänzen.

3. Elektropneumatische Bremse nach Anspruch 1, wobei das Bremsdruckeinstellmodul ein separates Bremsvorsteuerdrucksteuermodul, ein Verteilerventildrucksteuermodul und ein Bremszylinderdrucksteuermodul aufweist;
das separate Bremsvorsteuerdrucksteuermodul einen separaten Bremsvorsteuerluftzylinder (7), der konfiguriert ist, einen separaten Bremsvorsteuerdruck auszugeben, eine vierte Luftladeleitung, die mit dem Gesamtluftmodul kommuniziert, um Luft an den separaten Bremsvorsteuerluftzylinder (7) zuzuführen, ein separates elektropneumatisches Bremsventil (8), das in der vierten Luftladeleitung bereitgestellt ist, um die Luftladung des separaten Bremsvorsteuerluftzylinders (7) zu steuern, und ein separates elektropneumatisches Entlastungsventil (9), das in dem separaten Bremsvorsteuerluftzylinder (7) bereitgestellt ist, um die Luftentladung des separaten Bremsvorsteuerluftzylinders (7) zu steuern, aufweist;
das Verteilerventildrucksteuermodul ein Verteilerventil (10) und N DBI-Ventile aufweist, die mit dem Gesamtluftmodul in Kommunikation stehen, ein Arbeitsluftzylinder des Verteilerventils (10) mit der Zugleitung kommuniziert und ein Vorsteuerluftzylinder des Verteilerventils (10) mit dem Arbeitsluftzylinder kommuniziert, ein Vorsteuerluftzylinderentlastungsventil an dem Vorsteuerluftzylinder bereitgestellt ist; und die N DBI-Ventile allesamt mit dem Vorsteuerluftzylinder kommunizieren, um einen Verteilerventil-Vorsteuerluftzylinderdruck des Vorsteuerluftzylinders auszugeben, wobei N die Anzahl der Drehgestelle der Lokomotive ist;
das Bremszylinderdrucksteuermodul N Abgleichventile, die jeweils mit den DBI-Ventilen kommunizieren, ein Aktionsventil und ein drittes Abgleichventil (18) zum Ausgeben des größeren Drucks der N Aktionsventile aufweist und die Abgleichventile mit dem separaten Bremsvorsteuerdrucksteuermodul kommunizieren, das Aktionsventil mit dem Abgleichventil kommuniziert, um den größeren von dem Verteilerventil-Vorsteuerluftzylinderdruck und dem separaten Bremsvorsteuerdruck an den entsprechenden Bremszylinder auszugeben, und das dritte Abgleichventil (18) mit dem Feststellbremsdrucksteuermodul kommuniziert und ein Ausgangsdruck des dritten Abgleichventils (18) ein Bremszylinderdruck ist.

4. Elektropneumatische Bremse nach Anspruch 3, wobei das Gesamtluftmodul aufweist:
eine erste Leitung, die mit einem Kompressor kommuniziert;
einen ersten Bremsluftzylinder (19), der mit der ersten Leitung durch ein erstes Einwegventil kommuniziert;
einen zweiten Bremsluftzylinder (20), der mit der ersten Leitung durch ein zweites Einwegventil kommuniziert;
eine zweite Leitung, die mit der ersten Leitung kommuniziert, um das Ausgleichsbehälterdrucksteuermodul zu laden;
eine dritte Leitung, die mit einem ersten Bremsluftzylinder (19) kommuniziert, um Luft an das Verteilerventildrucksteuermodul zuzuführen;
eine vierte Leitung, die mit einem zweiten Bremsluftzylinder (20) kommuniziert, um Luft an das Verteilerventildrucksteuermodul zuzuführen;
eine fünfte Leitung, die mit der dritten Leitung kommuniziert, um ein erstes Aktionsventil (16) zu laden;
eine sechste Leitung, die mit der vierten Leitung kommuniziert, um ein zweites Aktionsventil (17) zu laden;
eine siebte Leitung, die mit dem separaten Bremsvorsteuerdrucksteuermodul kommuniziert;
eine achte Leitung, die mit dem Feststellbremsdrucksteuermodul kommuniziert.

5. Elektropneumatische Bremse nach Anspruch 1, wobei das Feststellbremsdrucksteuermodul einen vierten Abgleich (21) zum Ausgeben des größeren von dem Bremszylinderdruck und dem Feststellbremsdruck, eine elektropneumatische Impulsbremse (22), einen Feststellbremszylinder, einen Feststellbremsbeaufschlagungsdruckschalter (23) und einen Feststellbremsentlastungsdruckschalter (24) aufweist; wenn der Feststellbremsbeaufschlagungsdruckschalter (23) einen hohen Pegel ausgibt, eine Entlastungsposition der elektropneumatischen Impulsbremse (22) mit dem Gesamtluftmodul kommuniziert; wenn der Feststellbremsentlastungsdruckschalter (24) einen hohen Pegel ausgibt, eine Bremsposition der elektropneumatischen Impulsbremse (22) mit der Atmosphäre kommuniziert.

6. Elektropneumatische Bremse nach Anspruch 1, ferner aufweisend ein Notbremsmodul, wobei das Notbremsmodul aufweist:
eine Hauptluftentladeleitung zum Entladen eines Drucks der Zugleitung an die Atmosphäre;
ein Notmagnetventil (25) zum Steuern einer ersten Luftentladeleitung, um mit der Atmosphäre zu kommunizieren, wobei das Notmagnetventil (25) mit einem ersten Notdruckschalter in Kommunikation steht;
ein Notventil (26) zum Steuern der Zugleitung, um mit der ersten Luftentladeleitung zu kommunizieren;
eine Hilfsluftentladeleitung zum Entladen des Drucks der Zugleitung an die Atmosphäre, wobei die Hilfsluftentladeleitung durch ein Notventil (27) mit der Zugleitung in Kommunikation steht und das Notventil (27) mit einem zweiten Notdruckschalter in Kommunikationsverbindung steht.

7. Elektropneumatische Bremse nach Anspruch 1, ferner aufweisend ein Reserveausgleichsdrucksteuermodul, wobei das Reserveausgleichsdrucksteuermodul mit der ersten Luftladeleitung durch ein elektropneumatisches Modusumschaltventil (13) zum Steuern der elektropneumatischen Bremse kommuniziert, um zwischen einem elektropneumatischen Modus und einem Reservemodus umzuschalten, sich das elektropneumatische Modusumschaltventil (13) zwischen der elektropneumatischen Entlastungsbremse (3) und dem Ausgleichsbehälter (1) befindet;
das Reserveausgleichsdrucksteuermodul einen Reserveausgleichsbehälter, eine fünfte Luftladeleitung, die mit dem elektropneumatischen Modusumschaltventil (13) zum Laden des Reserveausgleichsbehälters kommuniziert, eine elektropneumatische Reserveentlastungsbremse (28) zum Steuern der Kommunikation der fünften Luftladeleitung, ein elektropneumatisches Reservebremsventil (29), das mit dem Reserveausgleichsbehälter kommuniziert, um die Luftentladung an den Reserveausgleichsbehälter zu steuern, und ein Reserveventil (30) zum Steuern des Reserveausgleichsbehälters, um mit dem Ausgleichsbehälter (1) zu kommunizieren, aufweist.

8. Elektropneumatische Bremse nach Anspruch 1, wobei zwischen dem Kompressor und dem Gesamtluftmodul ein Gesamtluftdrucksteuermodul bereitgestellt ist, wobei das Gesamtluftdrucksteuermodul aufweist:
einen ersten Druckschalter (31) zum Entfernen eines Traktionsblockierungssignals, bei dem der Arbeitsdruck des ersten Druckschalters (31) 8,5 bis 10 bar beträgt;
einen zweiten Druckschalter (32) zum Steuern der Luftzufuhr der beiden Kompressoren, bei dem der Arbeitsdruck des zweiten Druckschalters (32) 7,5 bis 9,0 bar beträgt;
einen dritten Druckschalter (33) zum Steuern der Luftzufuhr eines Kompressors, bei dem der Arbeitsdruck des dritten Druckschalters (32) 5,0 bis 6,0 bar beträgt.

9. Elektropneumatische Bremse nach Anspruch 1, ferner aufweisend ein Hebebügelsteuermodul, wobei das Hebebügelsteuermodul einen Hebebügelzylinder (34) und ein mit dem Hebebügelzylinder (34) kommunizierendes Hebebügelluftzylinderluftentladeventil (35) aufweist und der Hebebügelzylinder (34) mit einem Hilfskompressor kommuniziert.

## Revendications

1. Frein électropneumatique comprenant un module d'air total permettant de fournir de l'air total, un module de commande de pression de réservoir de compensation permettant d'ajuster la pression d'un conduit de train, un module d'ajustement de pression de frein permettant d'ajuster la force de freinage d'un cylindre de frein conformément à un changement de pression dans le conduit de train, et un module de commande de pression de frein de stationnement permettant le freinage si une locomotive est à l'arrêt ou le freinage d'une locomotive conformément à la force de freinage ; le module d'air total communiquant avec un compresseur ;
dans lequel
le module de commande de pression de réservoir de compensation présente un réservoir de compensation (1), un premier conduit de chargement d'air communiquant avec le module d'air total pour charger le réservoir de compensation (1), un deuxième conduit de chargement d'air communiquant avec le module d'air total pour charger le conduit de train, et une vanne-relais (2), et la vanne-relais (2) commande le chargement et le déchargement d'air du conduit de train par la différence de pression entre le réservoir de compensation (1) et le conduit de train ;
une vanne électropneumatique de sécurité (3) permettant de commander le chargement d'air du réservoir de compensation (1) est fournie sur le premier conduit de chargement d'air ;
une vanne d'arrêt d'air total (4) permettant de commander le chargement d'air du conduit de train est fournie sur le deuxième conduit de chargement d'air ;
une vanne électropneumatique de frein (5) permettant de commander le déchargement d'air du réservoir de compensation (1) communique avec le réservoir de compensation (1).

2. Frein électropneumatique selon la revendication 1, dans lequel le module de commande de pression de réservoir de compensation comprend un troisième conduit de chargement d'air permettant d'augmenter un chargement d'air dans le deuxième conduit de chargement d'air, une première extrémité du troisième conduit de chargement d'air communique avec le module d'air total, une seconde extrémité du troisième conduit de chargement d'air communique avec le deuxième conduit de chargement d'air, et une vanne électropneumatique de sécurité rapide (6) est fournie sur le troisième conduit de chargement d'air permettant de commander le troisième conduit de chargement d'air pour augmenter un chargement d'air dans le deuxième conduit de chargement d'air.

3. Frein électropneumatique selon la revendication 1, dans lequel le module d'ajustement de pression de frein comprend un module de commande de pression de précommande de frein séparé, un module de commande de pression de vanne de distribution, et un module de commande de pression de cylindre de frein ;
le module de commande de pression de précommande de frein séparé présente un cylindre d'air de précommande de frein séparé (7) configuré pour délivrer en sortie une pression de précommande de frein séparé, un quatrième conduit de chargement d'air communiquant avec le module d'air total pour alimenter en air le cylindre d'air de précommande de frein séparé (7), une vanne électropneumatique de frein séparé (8) fournie dans le quatrième conduit de chargement d'air permettant de commander le chargement d'air du cylindre d'air de précommande de frein séparé (7) et une vanne électropneumatique de sécurité séparée (9) fournie dans le cylindre d'air de précommande de frein séparé (7) permettant de commander le déchargement d'air du cylindre d'air de précommande de frein séparé (7) ;
le module de commande de pression de vanne de distribution présente une vanne de distribution (10) et N vannes DBI en communication avec le module d'air total, un cylindre d'air de travail de la vanne de distribution (10) communique avec le conduit de train, et un cylindre d'air de précommande de la vanne de distribution (10) communique avec le cylindre d'air de travail, une vanne de sécurité de cylindre d'air de précommande est fournie sur le cylindre d'air de précommande, et les N vannes DBI communiquent toutes avec le cylindre d'air de précommande permettant de délivrer en sortie une pression de cylindre d'air de précommande de vanne de distribution du cylindre d'air de précommande, dans lequel N est le nombre de bogies de la locomotive ;
le module de commande de pression de cylindre de frein présente N vannes de comparaison communiquant respectivement avec les vannes DBI, une vanne d'action, et une troisième vanne de comparaison (18) permettant de délivrer en sortie la pression la plus grande des N vannes d'action, et les vannes de comparaison communiquent avec le module de commande de pression de précommande de frein séparé, la vanne d'action communique avec la vanne de comparaison, pour délivrer en sortie la pression la plus grande parmi la pression de cylindre d'air de précommande de vanne de distribution et la pression de précommande de frein séparé au cylindre de frein correspondant, et la troisième vanne de comparaison (18) communique avec le module de commande de pression de frein de stationnement, et une pression délivrée en sortie de la troisième vanne de comparaison (18) est une pression de cylindre de frein.

4. Frein électropneumatique selon la revendication 3, dans lequel le module d'air total comprend :
un premier conduit communiquant avec un compresseur ;
un premier cylindre d'air de frein (19) communiquant avec le premier conduit par l'intermédiaire d'une première vanne unidirectionnelle ;
un deuxième cylindre d'air de frein (20) communiquant avec le premier conduit par l'intermédiaire d'une deuxième vanne unidirectionnelle ;
un deuxième conduit communiquant avec le premier conduit permettant de charger le module de commande de pression de réservoir de compensation ;
un troisième conduit communiquant avec un premier cylindre d'air de frein (19) permettant d'alimenter en air le module de commande de pression de vanne de distribution ;
un quatrième conduit communiquant ave un deuxième cylindre d'air de frein (20) permettant d'alimenter en air le module de commande de pression de vanne de distribution ;
un cinquième conduit communiquant avec le troisième conduit permettant le chargement d'une première vanne d'action (16) ;
un sixième conduit communiquant avec le quatrième conduit permettant le chargement d'un deuxième vanne d'action (17) ;
un septième conduit communiquant avec le module de commande de pression de précommande de frein séparé ;
un huitième conduit communiquant avec le module de commande de pression de frein de stationnement.

5. Frein électropneumatique selon la revendication 1, dans lequel le module de commande de pression de frein de stationnement présente une quatrième comparaison (21) permettant de délivrer en sortie la pression la plus grande parmi la pression de cylindre de frein et la pression de frein de stationnement, un frein électropneumatique à impulsion (22), un cylindre de frein de stationnement, un interrupteur manométrique d'application de frein de stationnement (23) et un interrupteur manométrique de sécurité de frein de stationnement (24) ; si l'interrupteur manométrique d'application de frein de stationnement (23) délivre en sortie un niveau élevé, une position de sécurité du frein électropneumatique à impulsion (22) communique avec le module d'air total ; si l'interrupteur manométrique de sécurité de frein de stationnement (24) délivre en sortie un niveau élevé, une position de frein du frein électropneumatique à impulsion (22) communique avec l'atmosphère.

6. Frein électropneumatique selon la revendication 1, comprenant en outre un module de freinage d'urgence, dans lequel le module de freinage d'urgence comprend :
un conduit de décharge d'air principal permettant de décharger une pression du conduit de train dans l'atmosphère ;
une électrovanne d'urgence (25) permettant de commander un premier conduit de décharge d'air devant communiquer avec l'atmosphère, dans lequel l'électrovanne d'urgence (25) communique avec un premier interrupteur manométrique d'urgence ;
une vanne d'urgence (26) permettant de commander le conduit de train pour communiquer avec le premier conduit de déchargement d'air ;
un conduit de décharge d'air auxiliaire permettant de décharger la pression du conduit de train dans l'atmosphère, dans lequel le conduit de déchargement d'air auxiliaire est en communication avec le conduit de train par l'intermédiaire d'une vanne d'urgence (27), et la vanne d'urgence (27) est en communication avec un deuxième interrupteur manométrique d'urgence.

7. Frein électropneumatique selon la revendication 1, qui comprend en outre un module de commande de pression de compensation de sauvegarde, dans lequel le module de commande de pression de compensation de sauvegarde communique avec le premier conduit de chargement d'air par l'intermédiaire d'une vanne électropneumatique de commutation de mode (13) permettant de commander le frein électropneumatique pour commuter entre un mode électropneumatique et un mode de sauvegarde, la vanne électropneumatique de commutation de mode (13) est située entre le frein électropneumatique de sécurité (3) et le réservoir de compensation (1) ;
le module de commande de pression de compensation de sauvegarde présente un réservoir de compensation de sauvegarde, un cinquième conduit de chargement d'air communiquant avec la vanne électropneumatique de commutation de mode (13) permettant de charger le réservoir de compensation de sauvegarde, un frein électropneumatique de sécurité de sauvegarde (28) permettant de commander la communication du cinquième conduit de chargement d'air, une vanne électropneumatique de frein de sauvegarde (29) communiquant avec le réservoir de compensation de sauvegarde pour commander le déchargement d'air au réservoir de compensation de sauvegarde, et une vanne de sauvegarde (30) permettant de commander le réservoir de compensation de sauvegarde pour communiquer avec le réservoir de compensation (1).

8. Frein électropneumatique selon la revendication 1, dans lequel un module de commande de pression d'air total est fourni entre le compresseur et le module d'air total, le module de commande de pression d'air total comprend :
un premier interrupteur manométrique (31) permettant de retirer un signal de blocage de traction, dans lequel la pression de travail du premier interrupteur manométrique (31) va de 8,5 à 10 bar ;
un deuxième interrupteur manométrique (32) permettant de commander l'alimentation en air des deux compresseurs, dans lesquels la pression de travail du deuxième interrupteur manométrique (32) va de 7,5 à 9 bar ;
un troisième interrupteur manométrique (33) permettant de commander l'alimentation en air d'un compresseur, dans lequel la pression de travail du troisième interrupteur manométrique (32) va de 5,0 à 6,0 bar.

9. Frein électropneumatique selon la revendication 1, comprenant en outre un module de commande d'arc de levage, dans lequel le module de commande d'arc de levage présente un cylindre d'arc de levage (34) et une vanne de décharge d'air de cylindre d'air d'arc de levage (35) communiquant avec le cylindre d'arc de levage (34), et le cylindre d'arc de levage (34) communique avec un compresseur auxiliaire.
